# EUROPEAN PATENT SPECIFICATION

(11) **EP 0 255 540 B1**
(45) Date of publication and mention of the grant of the patent: **27.10.1993**
(21) Application number: 87901175.7
(22) Date of filing: 13.01.1987
(51) Int. Cl.: B32B 31/00

(54) **AN APPARATUS FOR ATTACHING A FITMENT TO A WEB OF FILM**
VORRICHTUNG ZUR BEFESTIGUNG EINES HILFSSTÜCKS AUF EINEM FILMBAND
APPAREIL DE FIXATION D'UN ACCESSOIRE SUR UNE BANDE DE FILM

(30) Priority: 17.01.1986 US 819648
(43) Date of publication of application: 10.02.1988
(73) Proprietor: BAXTER INTERNATIONAL INC. (a Delaware corporation), Deerfield Illinois 60015 (US)
(72) Inventor: GLEASON, Byron, Algonquin, IL 60102 (US)
(74) Representative: MacGregor, Gordon
(86) International application number: US8700076
(87) International publication number: WO8704391

(56) References cited:
- WO-A-86/04546

## Description

### BACKGROUND OF THE INVENTION

The present invention relates to an apparatus for attaching a fitment to a web of film. In particular, the present invention relates to an improved apparatus for piercing and sealing a web of film to a fitment.

In some types of packaging arts including, inter alia, pharmaceutical, food products, and dairy products, it is desirable to make flexible containers that include means for accessing the container (hereinafter "fitments"). As used herein, the term fitment includes, without limitation, valves, ports, port enclosure assemblies, and other means for accessing a container. Fitments provide ports for establishing fluid communication between the container and the outside environment. An example of a container utilizing a fitment is the VIAFLEX® flexible container for parenteral solutions produced by Travenol Laboratories, Inc. of Deerfield, Illinois.

Flexible containers with fitments may be produced by form, fill and seal packaging machines. Form, fill and seal packaging machines provide an apparatus for forming a web of film into a flexible container housing a desired product. Typically, these machines include a former or mandrel, a fill tube, and heat sealers. The former or mandrel forms the web of film into a tubular shape around the fill or film tube. The fill tube is utilized to dispense the material to be packaged into the tubular shaped web of film.

In one type of form, fill and seal packaging machine, the fitments are attached via an impulse heat sealing system. Usually impulse heat sealing systems utilize a ring heating element that has a shape substantially similar to the flange portion of the fitment. In an impulse type system, the ring member is not constantly heated but rather, heated for a sufficient length of time to provide the ring member with enough heat energy to cause the web of film to melt and fusion seal to the fitment flange.

Depending upon its end use, the web of film, to which the fitment is attached, may or may not include a prepierced hole. In the typical "bag in a box" design, the film is typically prepierced. To this end, the web of film is prepierced and the fitment is located over the prepierced hole so that there is fluid communication between the fitment and the container. The prior art has also utilized a method of passing a fitment through the prepierced hole. Both these methods require that the fitment is located with precision over, or in, the prepierced hole, slowing down the production of the flexible containers.

EP-A-0210259, which conforms to Art. 54(3)EPC, discloses an apparatus for contemporaneously piercing and sealing the web of film to the fitment. The present invention provides an improved apparatus for piercing and sealing the web of film to the fitment.

The present invention provides an apparatus for piercing a web of film and sealing the web of film to a fitment having a main portion and a flange, the apparatus comprising an abutment member including a heated face which holds the web of film in contact with the flange during sealing, characterised in that the heated face has lower and raised flat regions both for holding the web of film in contact with the flange and further characterised by a heat seal tip extending from the raised region for piercing the web of film
An advantage of the present invention is that the apparatus for piercing and sealing the web of film produces a strong heat seal between the web of film and the fitment.

Moreover, an advantage of the present invention is that the heat sealer of the present invention produces an effective heat seal on the flange of the fitment.

Furthermore, an advantage of the present invention is that the heat sealer can utilize lower heat seal temperatures.

The heat sealer may include a radius and undercut to prevent draping of the film.

The heat sealer may include a groove to prevent air entrapment between the heat sealer and the web of film.

The heat sealer may include flats to improve the ability of the user to remove the heat sealer from the heat seal block.

Additional features and advantages are described in, and will be apparent from, the detailed description of the presently preferred embodiments and from the drawings.

### BRIEF DESCRIPTION OF THE DRAWINGS

Figure 1 illustrates a side elevational view of an apparatus for piercing and sealing.

Figure 2 illustrates a perspective view of the heat sealer of Figure 1.

Figure 3 illustrates a perspective top elevational view of a further embodiment of a heat sealer.

### DETAILED DESCRIPTION OF THE PRESENTLY PREFERRED EMBODIMENTS

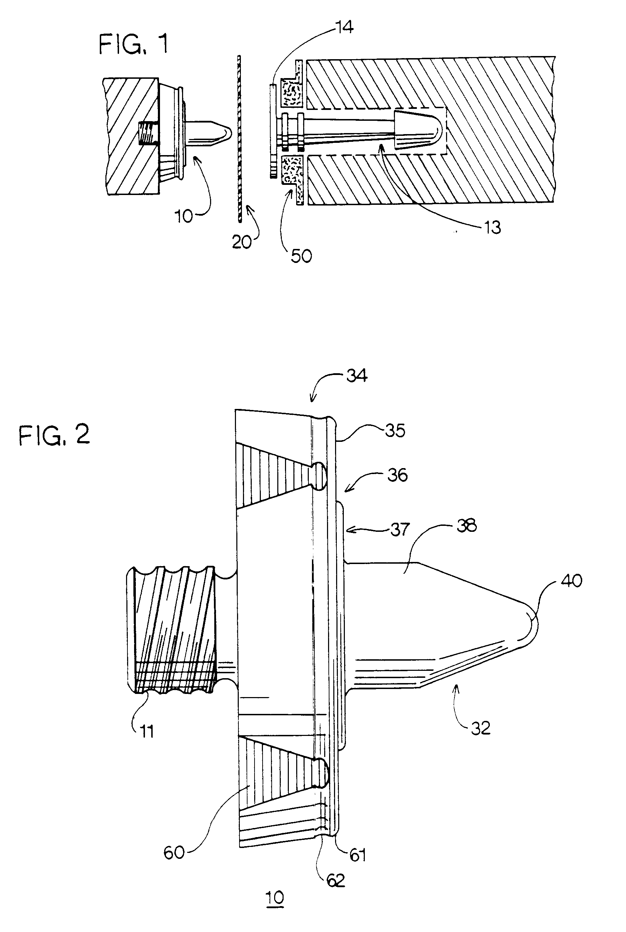

Figure 1 illustrates an embodiment of a heat sealer 10. The heat sealer 10 functions to attach a fitment 13 to a web of film 20. This allows one in a form, fill and seal packaging machine to create a container having a fitment 13. As used herein, the term "form, fill and seal packaging machine" means packaging machines for creating from a web of film a container that houses a product.

The heat sealer 10 is designed to be preferably utilized with the apparatus and method for attaching a fitment to a web of film described in EP-A-0210259. The disclosure of EP-A-0210259 is incorporated herein by reference.

To this end, as illustrated in Figure 1 and 2, the heat sealer 10 includes a threaded portion 11 that is designed to be received within a heat seal block 12 that includes a cartridge heater (not illustrated) and thermocouple (not illustrated). The heat seal block 12 is then secured to a support block on the fill tube as described in U.S. Patent Application No. 697,534.

Referring to Figure 2, the heat sealer 10 includes a heat seal tip 32 and an abutment member 34. The abutment member 34 includes a face 36. As illustrated, the face 36 of the abutment member 34 includes a flat lower region 35 and a flat raised region 37.

The raised region 37 insures that a strong heat seal is created between the fitment 13 and the web of film 20 across the entire surface of the flange 14 of the fitment. The raised region 37 compensates for the flexing of the fitment 13 as the web of film 20 is sealed to the fitment 13.

Preferably the raised region 37 extends from the lower portion 35 of the face 36 of the abutment member 34 by approximately 0.0254 mm to about 0.381 mm (1/1000 to about 15/1000 of an inch) and most preferably extends by approximately 0.127 mm (5/1000 of an inch). The raised region 37 is desirable in that, due to the increased height of the raised region 37, the web of film 20 is securely sealed to the flange 14 of the fitment 13.

The raised region 37 preferably has a circumference equal to that portion of the flange 14 of the fitment 13 that is not backed up by the elastomeric back-up member 50 of the heat seal press head 41. As discussed in detail in EP-A-0210259, the heat seal press head 41 functions to urge the fitment 13 towards the web of film 20 and thereby the heat sealer 10. Due to the construction of the fitment 13, the portion of the fitment 13 that is not backed up by the back-up member 50 has sufficient structural rigidity and therefore does not need the back-up member 50 supporting it.

The heat seal tip 32 includes an elongated body 38 and point 40. Preferably the point 40 has a conical shape. Preferably the angle of the vertex of the point 40 is between approximately 40 to about 55 degrees. Preferably the angle of the vertex is approximately 45 degrees. Preferably the point 40 is radiused off to insure that it is not too sharp.

The length of the heat sealer can be an important dimension. Preferably the length of the heat sealer 10 from its back portion 31 to the tip 40 is approximately 13.97 to about 16.51 mm (550/1000 to about 650/1000 of an inch) for a web of film with a thickness of approximately 100 microns to about 200 microns.

Preferably the heat sealer 10 is constructed from a metal, e.g., aluminum. It has been found that 6061 aluminum functions satisfactorily. Preferably the aluminum is bright polished and coated with an anodized teflon impregnated coating. An anodized teflon impregnated coating sold under the name Nituff by Nimet Industries has been found to function satisfactorily. The teflon coating provides a better wear for the heat sealer 10 and also provides a surface that can be easily cleaned of the plastic buildup. Moreover, the coating prevents denting of the heat sealer 10.

Preferably, the heat sealer 10 includes flats 60. The flats 60 provide a means to aid the user in removing the heat sealer 10 from the heat seal block. Because the heat sealer 10 is heated during use, the threads 11 may deform due to the heat. Accordingly it may be difficult to remove the heat sealer 10 from the heat seal block. The flats 60 provide a means for utilizing a mechanical advantage to remove the heat sealer 10.

Preferably, the elongated body 38 of the heat seal tip 32 has an outer diameter that is approximately 0.0508 mm (.002 inches) to about 0.1016 mm (.004 inches) larger than the inner diameter of the opening in the fitment 13. This can be an important dimension because if the diameter is too large the heat seal tip 32 will be difficult to remove from the shaft of the fitment 13 after the web of film 20 has been sealed to the fitment. If the outer diameter of the heat seal tip 32 is too small then it will be difficult to get proper alignment with respect to the fitment 13 and web of film 20.

Preferably, the heat sealer 10 includes a radius 61 and undercut 62. The radius 61 and undercut 62 prevent draping of the film 13 as it is sealed to the fitment 13. Without the radius 61 and undercut 62 the film 20 can be pushed down around the side of the abutment member 34 by the back-up member 50 causing the film to weaken at this point. The radius 61 and undercut 62 function to radius away the film 20 from contact with the heat sealer 10. Preferably, the radius 61 has a cross-sectional width of approximately 0.508 to about 0.889 mm (20/1000 to about 35/1000 of an inch). It has been found that if the radius has a thickness of approximately 0.6858 mm (27/1000 of an inch) it functions satisfactorily. Preferably the undercut 63 is between approximately 0.254 to about 0.762 mm (10/1000 to about 30/1000 of an inch) deep. It has been found that if the undercut is approximately 0.508 mm (20/1000 of an inch) deep it functions satisfactorily.

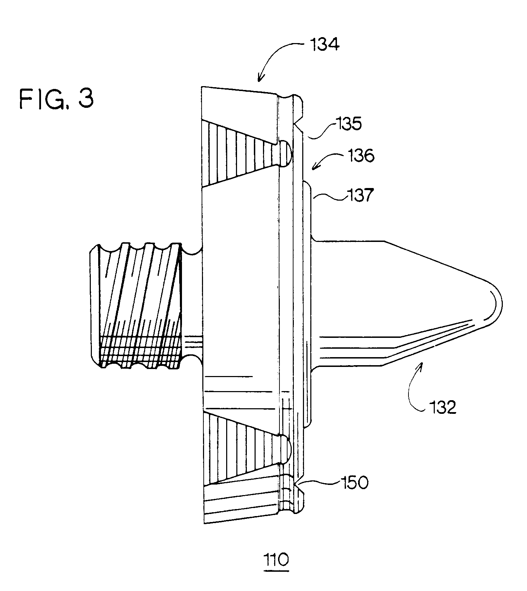

Figure 3 illustrates another embodiment of a heat sealer 110. As illustrated, the heat sealer 110 includes a heat seal tip 132 and an abutment member 134 that includes a face 136. The face 136 includes a raised region 137 and a lower region 135. Preferably, the raised region 137 has dimensions that are similar to those of the raised region 37 of the heat sealer 10 previously disclosed.

The lower region 135 may include a groove 150. The groove 150 functions to provide a means for allowing air that is entrapped during the sealing process between the face 135 of the heat sealer 10 and the web of film 20 to escape. Preferably the groove 150 is located between approximately 1.27 to about 1.778 mm (50/1000 to about 70/1000 of the inch) from the circumferential edge of the face 136. Most preferably, the groove 150 is located 1,524 mm (60/1000 of an inch) from the circumferential edge of the face 136. It has been found that a groove 150 with a depth of approximately 0.0254 mm (1/1000 of an inch) and a width of 0.0254 mm (1/1000 of an inch) functions satisfactorily.

## Claims

1. An apparatus for piercing a web of film (20) and sealing the web of film (20) to a fitment (13) having a main portion and a flange (14), the apparatus comprising an abutment member (34,134) including a heated face (36,136) which holds the web of film (20) in contact with the flange (14) during sealing, characterised in that the heated face (36,136) has lower and raised flat regions (35,135; 37,137) both for holding the web of film in contact with the flange (14) and further characterised by a heat seal tip (32,132) extending from the raised region (37,137) for piercing the web of film (20)

2. Apparatus according to Claim 1 in combination with a fitment (13) and a press head (41), the press head (41) being located on the opposite side of the web of film (20) to said heat seal tip (32,132) for urging the fitment (13) towards the web of film (20), the fitment press head (41) having a backup member (50) for backing up a portion of the flange (14) of the fitment (13); the raised region (37) of the heated face having a circumference substantially equal to a circumference of a portion of the flange (14) not backed up by the backup member (50).

3. The apparatus of Claim 1 or 2 wherein the heated face (136) includes a groove (150) for releasing entrapped air.

4. The apparatus of Claim 3 wherein the groove (150) is positioned in said lower region (135).

5. The apparatus of Claim 1, 2, 3 or 4 wherein means for attaching the apparatus to heating means is provided comprising a threaded screw (11) extending from the back of the abutment member (34,134).

6. The apparatus of Claim 5 comprising flats (60) circumscribing a portion of the outer circumference of the abutment member for aiding in the removal of the apparatus from the heating means.

7. The apparatus of any preceding claim wherein the angle of the vertex of the heat seal tip is approximately 40 to about 55 degrees.

8. The apparatus of any preceding claim including a radius (61) circumscribing the heated face and defined by an undercut (62) for preventing draping of the film.

## Patentansprüche

1. Vorrichtung zum Durchstoßen einer Folienbahn (20) und Verschweißen der Folienbahn (20) mit einer Verbindungseinrichtung (13), die einen Hauptbereich und einen Flansch (14) hat, wobei die Vorrichtung aufweist: ein Widerlagerelement (34, 134), das eine erwärmte Vorderfläche (36, 136) hat, die die Folienbahn (20) während des Verschweißens in Kontakt mit dem Flansch (14) hält, dadurch gekennzeichnet, daß die erwärmte Vorderfläche (36, 136) sowohl niedrigere als auch erhabene flache Bereiche (35, 135; 37, 137) hat, um die Folienbahn in Kontakt mit dem Flansch (14) zu halten, und ferner gekennzeichnet durch eine Thermoschweißspitze (32, 132), die sich von dem erhabenen Bereich (37, 137) erstreckt, um die Folienbahn (20) zu durchstoßen.

2. Vorrichtung nach Anspruch 1 in Kombination mit einer Verbindungseinrichtung (13) und einem Pressenkopf (41), wobei der Pressenkopf (41) auf der der Thermoschweißspitze (32, 132) entgegengesetzten Seite der Folienbahn (20) angeordnet ist, um die Verbindungseinrichtung (13) in Richtung zu der Folienbahn (20) zu drängen, wobei der Pressenkopf (41) für die Verbindungseinrichtung ein Abstützelement (50) hat, um einen Bereich des Flansches (14) der Verbindungseinrichtung (13) abzustützen; und der erhabene Bereich (37) der erwärmten Vorderfläche einen Umfang hat, der im wesentlichen gleich einem Umfang eines Bereichs des Flansches (14) ist, der von dem Abstützelement (50) nicht abgestützt ist.

3. Vorrichtung nach Anspruch 1 oder 2, wobei die erwärmte Vorderfläche (136) eine Nut (150) aufweist, um eingeschlossene Luft abzugeben.

4. Vorrichtung nach Anspruch 3, wobei die Nut (150) in dem niedrigeren Bereich (135) positioniert ist.

5. Vorrichtung nach Anspruch 1, 2, 3 oder 4, wobei eine Einrichtung zum Befestigen der Vorrichtung an einer Heizeinrichtung vorgesehen ist, die eine Gewindeschraube (11) aufweist, die sich von der Rückseite des Widerlagerelements (34, 134) erstreckt.

6. Vorrichtung nach Anspruch 5, die Abplattungen (60) aufweist, die einen Bereich des Außenumfangs des Widerlagerelements umschreiben, um das Entfernen der Vorrichtung von der Heizeinrichtung zu unterstützen.

7. Vorrichtung nach einem der vorhergehenden Ansprüche, wobei der Winkel des Scheitels der Thermoschweißspitze ca. 40° bis ca. 55° beträgt.

8. Vorrichtung nach einem der vorhergehenden Ansprüche, die einen Radius (61) aufweist, der die erwärmte Vorderfläche umschreibt und von einer Hinterschneidung (62) definiert ist, um ein Drapieren der Folie zu verhindern.

## Revendications

1. Appareil de perçage d'une bande de film (20) et de soudage de la bande de film (20) à un raccord (13) comportant une partie principale et un flasque (14), l'appareil comprenant un élément d'appui (34, 134) incluant une face chauffée (36, 136) qui maintient la bande de film (20) en contact avec le flasque (14) pendant le soudage, caractérisé en ce que la face chauffée (36, 136) comporte des régions planes en retrait et en proéminence (35, 135 ; 37, 137) destinées toutes deux à maintenir la bande de film en contact avec le flasque (14) et caractérisé en outre par une extrémité de thermo-soudage (32, 132) s'étendant à partir de la partie en proéminence (37, 137) pour percer la bande de film (20).

2. Appareil selon la revendication 1, en combinaison avec un raccord (13) et une tête de pressage (41), la tête de pressage (41) étant placée sur le côté de ladite bande de film (20) situé à l'opposé par rapport à l'extrémité de thermo-soudage (32, 132) pour pousser le raccord (13) vers la bande de film (20), la tête de pressage de raccord (41) comportant un élément d'appui (50) destiné à appuyer sur une partie du flasque (14) du raccord (13) ; la partie en proéminence (37) de la face chauffée présentant une circonférence sensiblement égale à une circonférence d'une partie du flasque (14) non appuyée par l'élément d'appui (50).

3. Appareil selon la revendication 1 ou 2, dans lequel la face chauffée (136) inclut une gorge (150) destinée à libérer de l'air piégé.

4. Appareil selon la revendication 3, dans lequel la gorge (150) est située dans ladite région en retrait (135).

5. Appareil selon l'une quelconque des revendications 1, 2, 3 ou 4, dans lequel un moyen pour fixer l'appareil à un moyen de chauffage est prévu et il comprend une vis filetée (11) s'étendant depuis l'arrière de l'élément d'appui (34, 134).

6. Appareil selon la revendication 5, comprenant des évidements (60) qui circonscrivent une partie de la circonférence externe de l'élément d'appui afin d'aider à ce que l'appareil soit séparé de l'élément de chauffage.

7. Appareil selon l'une quelconque des revendications précédentes, dans lequel l'angle au sommet de l'extrémité de thermo-soudage varie entre environ 40 et environ 55 degrés.

8. Appareil selon l'une quelconque des revendications précédentes, incluant une zone arrondie (61) qui circonscrit la face chauffée et qui est définie par une dépouille (62) pour empêcher une ondulation du film.
